# EUROPEAN PATENT APPLICATION

(11) **EP 4 389 484 A1**
(43) Date of publication of application: **26.06.2024**
(21) Application number: 22315347.9
(22) Date of filing: 21.12.2022
(51) Int. Cl.: B60K 15/03, F16L 23/02

(54) **A FUEL SYSTEM FOR A SHIP COMPRISING AN INTEGRITY MONITORING SYSTEM FOR DETECTING ATTEMPTED ACCESS, AND A SHIP COMPRISING THE FUEL SYSTEM**

(71) Applicant: GAZTRANSPORT ET TECHNIGAZ, 78470 Saint-Rémy-lès-Chevreuse (FR); Ascenz Solutions Pte. Ltd., Singapour 408868 (SG)
(72) Inventor: Glory, Julien, 408868 SINGAPOUR (SG); Deletre, Bruno, 78470 SAINT-REMY-LES-CHEVREUSE (FR); Tee, Aaron, 408868 SINGAPOUR (SG); Lim, Serena, 408868 SINGAPOUR (SG)
(74) Representative: Loyer & Abello

(57) **Abstract**

The invention pertains to a fuel system (11) for a ship (1), the fuel system (11) comprising:
- a fuel supply system (10);
- an access protection device (51, 52, 53) for providing protected access to the fuel or to an element of the fuel supply system (10), the access protection device having a protected condition and an unprotected condition; and
- an integrity monitoring system (40), the integrity monitoring system (40) including a controller (49) and a sensor (41, 42, 43) connected to the controller (49),
wherein the sensor (41, 42, 43) is configured to generate a detection signal representative of an actual condition of the access protection device (51, 52, 53), and wherein the controller (49) is configured to send a notification in response to a change of the detection signal indicating a change of the actual condition of the access protection device (51, 52, 53) from the protected condition towards the unprotected condition.

## Description

### Technical field

The invention pertains to a fuel system for a ship. More specifically, the invention pertains to a fuel system for a ship, the fuel system having an integrity monitoring system. The invention also pertains to a ship comprising such a fuel system.

As used herein, the term "fuel" encompasses any kind of fuel which is suitable for ship propulsion, and which is liquid at room temperature.

### Prior art

In some parts of the world, ships are vulnerable to fuel theft, especially when in port. Since the fuel is liquid at room temperature, stealing the fuel merely requires gaining unauthorized access to some part of the ship from which the fuel is accessible, pumping a desired quantity of fuel, and taking the stolen fuel away.

Fuel theft is not only an economic loss for the ship owner. It may also impair the proper operation or even the safety of the ship, for instance if there is insufficient fuel left aboard the ship for completing the next planned voyage of the ship, and/or if the stolen fuel is replaced with lower-grade fuel or even a liquid which is unsuitable as a fuel.

To detect fuel theft, it is known to affix seals or other tamper-evident devices to elements of the fuel supply system of the ship from which unauthorized access to the fuel may be gained.

However, periodic inspections of the seals or tamper-evident devices are required to detect fuel theft. Such inspections may be time-consuming and costly, and therefore be performed only infrequently. In such cases, it is impossible to detect fuel theft instantly or even rapidly. And even when the inspection finds that some seals or tamper-evident devices have been broken, it may be difficult or even impossible to ascertain whether fuel theft has taken place, or when it has taken place. Therefore, seals or tamper-evident devices are an insufficient or even ineffective defence against fuel theft.

Further, it is possible that even crew members of the ship assist in, or even initiate, fuel theft. Seals or tamper-evident devices are an even more ineffective defence in this case, not least because a crew member who assists in or initiates fuel theft will likely not report that a seal or a tamper-evident device has been broken.

### Summary of the invention

An idea on which the invention is based consists in fitting the fuel system of the ship with an integrity monitoring system which can detect attempted access to the fuel or an element of a fuel supply system of the ship. Another idea on which the invention is based consists in automatically sending a notification when attempted access to the fuel or to an element of the fuel supply system is detected. Yet another idea on which the invention is based consists in ensuring that attempted access can be detected without human input.

The invention provides a fuel system for a ship, the fuel system comprising:
- a fuel supply system for supplying fuel to a fuel consuming device;
- an access protection device for providing protected access to the fuel or to an element of the fuel supply system, the access protection device having a protected condition and an unprotected condition; and
- an integrity monitoring system, the integrity monitoring system including a controller and a sensor connected to the controller,
wherein the sensor is associated with the access protection device and is configured to generate a detection signal representative of an actual condition of the access protection device, and wherein the controller is configured to send a notification in response to a change of the detection signal indicating a change of the actual condition of the access protection device from the protected condition towards the unprotected condition.

The notification may alert a user, such as crew member aboard the ship, that an access protection device has changed from its protected condition towards its unprotected condition. Therefore, the notification may indicate that access to the fuel or to an element of the fuel supply system is being attempted through the access protection device. If the attempted access is not scheduled (e.g., for maintenance purposes) or otherwise expected, then the attempted access is likely a fuel theft attempt. Upon reviewing the notification, said user may take appropriate action, such as sending a person to verify the condition of the access protection device. Accordingly, the integrity monitoring system constitutes an effective defence against fuel theft, especially if the notification is relayed to the user in real time or in near real time.

Since the notification is sent by the controller in response to a change of the detection signal indicating a change of the actual condition of the access protection device, sending the notification does not require human input. The integrity monitoring system may thus constitute an effective defence against fuel theft even without placing trust in the crew members of the ship. In effect, the functioning of the integrity monitoring system is based on a threat model in which even the crew of the ship is a potential adversary.

In accordance with other advantageous embodiments, the fuel system may have one or more of the following features.

In accordance with one embodiment, the fuel supply system includes a containment system for containing the fuel.

In accordance with one embodiment, the fuel supply system further includes a data acquisition system for acquiring data relating to the fuel contained in the containment system.

In accordance with one embodiment, the element of the fuel supply system comprises an element of the data acquisition system.

In accordance with one embodiment, the element of the fuel supply system comprises an element of the containment system.

In accordance with one embodiment, the access protection device includes a bolt and a nut screwed onto the bolt, and the sensor is configured to detect a tightening force of the bolt.

In accordance with one embodiment, the sensor comprises a strain gauge associated with the nut or the bolt.

In accordance with one embodiment, the sensor comprises an annular load cell associated with the nut.

In accordance with one embodiment, the containment system comprises two parts attached by the bolt and the nut.

In accordance with one embodiment, the two parts of the containment system comprise two parts of a fuel pipe or two parts of a fuel tank.

In accordance with one embodiment, the access protection device includes an enclosure and the element of the fuel supply system is enclosed in the enclosure.

In accordance with one embodiment, the enclosure comprises a door, and the sensor is configured to detect a closed condition and an opened condition of the door.

In accordance with one embodiment, the enclosure is a cabinet. In accordance with another embodiment, the enclosure is a room.

In accordance with one embodiment, the sensor comprises a magnetic or infrared sensor.

In accordance with one embodiment, the sensor is connected to the controller via a wired connection.

In accordance with one embodiment, the controller is further configured to generate a notification in response to detecting that the wired connection has been interrupted for more than a predetermined amount of time.

Accordingly, the user receiving the notification from the controller may recognize that the wired connection has been interrupted, indicating potential tampering with the integrity monitoring system and therefore attempted fuel theft.

In accordance with one embodiment, the controller is configured to send a message containing the notification to a user device aboard the ship.

Accordingly, a user aboard the ship can be quickly alerted via the user device that access to the fuel or to an element of the fuel supply system is being attempted.

In accordance with one embodiment, the user device comprises a computer on the bridge of the ship.

In accordance with one embodiment, the controller is configured to send a message containing the notification to an onshore station.

Accordingly, the ship owner and/or relevant authorities may be informed that access to the fuel or to an element of the fuel supply system is being attempted.

The notification sent by the controller may be generated in various ways.

In accordance with one embodiment, the controller is configured to receive the detection signal and to generate the notification in response to a change of the detection signal indicating a change of the actual condition of the access protection device from the protected condition towards the unprotected condition.

Accordingly, the controller itself generates the notification, possibly without any input from systems not aboard the ship.

In accordance with another embodiment, the controller comprises a communication device connected to an onshore controller for sending the detection signal to the onshore controller and for receiving the notification from the onshore controller, the onshore controller being configured to generate the notification in response to a change of the detection signal indicating a change of the actual condition of the access protection device from the protected condition towards the unprotected condition, and the controller is configured to send the notification upon receiving the notification from the onshore controller.

Accordingly, the onshore controller generates the notification, and the controller sends the notification upon receiving the same from the onshore controller.

The invention also provides a ship comprising a fuel system in accordance with any one of the aforementioned embodiments.

In accordance with one embodiment, the fuel consuming device is a ship engine or a power generator aboard the ship.

In accordance with one embodiment, the ship is a cargo ship. In accordance with another embodiment, the ship is an offshore service vessel.

In accordance with one embodiment, the fuel is bunker oil or marine diesel oil.

### Brief description of the figures

The invention will be better understood, and other aims, details, features, and advantages thereof will become more clearly apparent in the course of the following description of particular embodiments of the invention given by way of nonlimiting illustration only with reference to the appended drawings.
Figure 1 is a schematic, partial side view of a ship including a fuel system, the fuel system including a fuel supply system.
Figure 2A is a block diagram of one embodiment of the fuel supply system.
Figure 2B is a block diagram of another embodiment of the fuel supply system.
Figure 3 is a block diagram of an integrity monitoring system aboard the ship.
Figure 4 is a schematic view of an access protection device according to one embodiment.
Figure 5 is a schematic view of an access protection device according to another embodiment.
Figure 6 is a schematic perspective view of an access protection device according to yet another embodiment.

### Description of embodiments

Embodiments of the invention will now be described with reference to the drawings. It should be noted that on the drawings, some elements may be depicted schematically and/or not to scale.

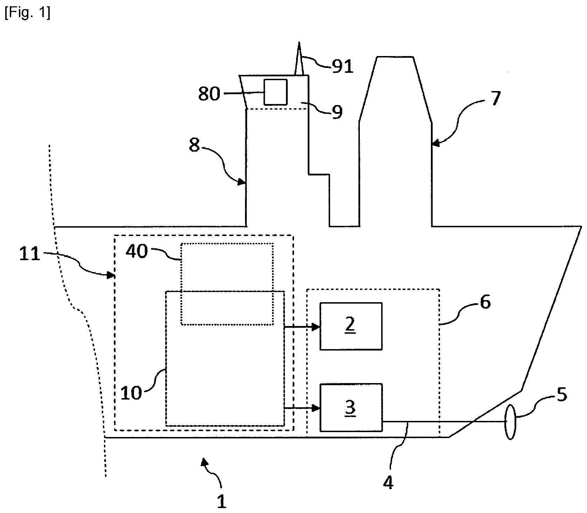

Figure 1 is a schematic, partial side view of a ship 1. The ship 1 comprises one or more fuel consuming devices, such as one or more shipboard power generators 2 for providing electric power to the ship and/or one or more ship engines 3 for propelling the ship 1, e.g. via a propeller shaft 4 driving a propeller 5.

The ship 1 further comprises a fuel system 11 which will be described in more detail below.

In the embodiment shown on Figure 1, the ship 1 is a cargo ship and is constructed according to a conventional cargo ship layout, whereby the shipboard power generator 2 and/or the ship engine 3 are located in an engine room 6 below a funnel 7, and the ship 1 comprises a superstructure 8, the superstructure 8 including a bridge 9 and possibly one or more additional decks, and the funnel 7 being placed astern of the superstructure 8. However, the ship 1 may be another type of ship, such as an offshore service vessel (OSV). The ship 1 may have a different construction than that shown on Figure 1. For instance, the fuel consuming devices, including the shipboard power generator 2 and/or the ship engine 3, may be located elsewhere aboard the ship 1.

As mentioned above, the ship 1 comprises a fuel system 11. The fuel system 11 includes a fuel supply system 10. As shown schematically by the arrows on Figure 1, the fuel supply system 10 supplies fuel to the fuel consuming devices, namely the shipboard power generator 2 and the ship engine 3.

As used herein, the term "fuel" encompasses any kind of fuel which is suitable for ship propulsion, and which is liquid at room temperature. For instance, the fuel may be bunker oil or marine diesel oil.

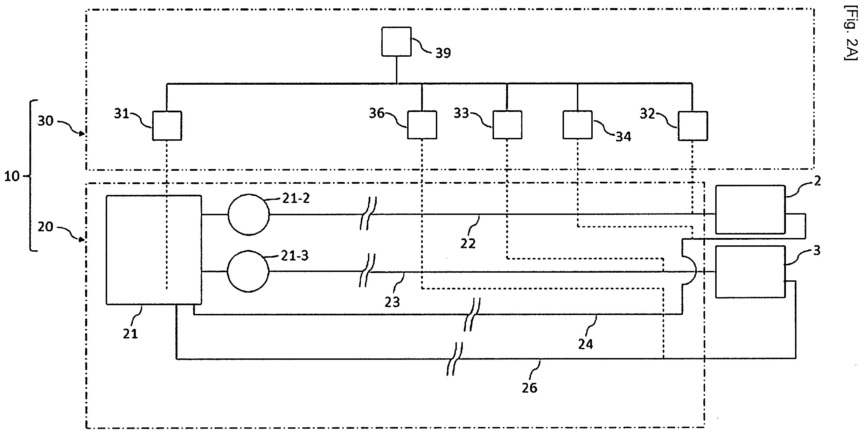

Figure 2A is a block diagram schematically depicting one embodiment of the fuel supply system 10. The fuel supply system 10 includes a containment system 20 and a data acquisition system 30.

The containment system 20 contains the fuel, by which it is meant that the containment system 20 in normal operation does not allow outside access to the fuel contained therein, while providing a path for the fuel to flow towards the shipboard power generator 2 and the ship engine 3. The containment system 20 thus includes a fuel tank 21, a fuel inlet line 22 from the fuel tank 21 to the shipboard power generator 2, and a fuel inlet line 23 from the fuel tank 21 to the ship engine 3. A fuel pump 21-2 is provided on the fuel inlet line 22, and a fuel pump 21-3 is provided on the fuel inlet line 23, to generate sufficient fuel pressure for the shipboard generator 2 and the ship engine 3, respectively.

The data acquisition system 30 acquires data relating to the fuel contained in the containment system 20.

For instance, the data acquisition system 30 may include a data acquisition controller 39, and various sensors. The sensors are connected to the data acquisition controller 39, whereby the data acquisition controller 39 acquires the measurements output by the sensors.

In the embodiment shown on Figure 2A, the sensors include a tank sensor 31, a first inlet sensor 32 provided on the fuel inlet line 22, e.g. at a fuel inlet of the shipboard power generator 2, and a second inlet sensor 33 provided on the fuel inlet line 23, e.g. at a fuel inlet of the ship engine 3.

Further, in the embodiment shown on Figure 2A, a fuel return line 24 returns unconsumed fuel from the shipboard power generator 2 to the tank 21, and a fuel return line 26 returns unconsumed fuel from the ship engine 3. A first return sensor 34 is provided on the fuel return line 24, e.g. at a fuel outlet of the shipboard power generator 2, and a second return sensor 36 is provided on the fuel return line 26, e.g. at a fuel outlet of the ship engine 3.

Each of the above-mentioned sensors may measure a temperature, density, flow, or another quantity relating to the fuel.

Merely by way of example, the fuel tank sensor 31 may measure a quantity of fuel in the fuel tank 21.

Merely by way of example, each of the inlet sensors 32, 33 and return sensors 34, 36 may measure a fuel flow. Thus, the fuel consumption of the shipboard power generator 2 may be determined by comparing the fuel flows measured by the inlet sensor 32 and the return sensor 34. Likewise, the fuel consumption of the ship engine 3 may be determined by comparing the fuel flows measured by the inlet sensor 34 and the return sensor 36. Said comparisons between fuel flows may be performed by the data acquisition controller 39 or by another system aboard the ship 1.

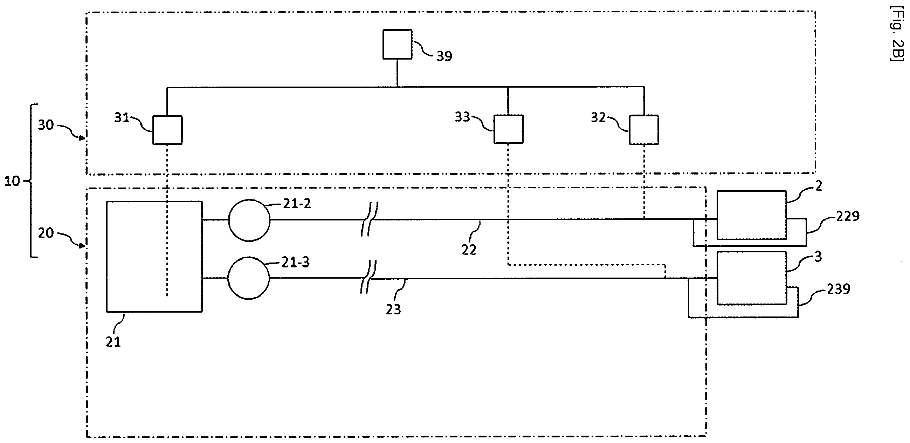

Figure 2B is a block diagram schematically depicting another embodiment of the fuel supply system 10. Elements which are identical to those of the embodiment of Figure 2A bear the same reference signs and are not described again except where necessary.

In the embodiment shown in Figure 2B, a fuel recirculation line 229 returns unconsumed fuel from the shipboard power generator 2 to the fuel inlet of the shipboard power generator 2, and a fuel recirculation line 239 returns unconsumed fuel from the ship engine 3 to the fuel inlet of the ship engine 3. Thus, the fuel consumption of the shipboard power generator 2 may be determined only based on the fuel flow measured by the inlet sensor 32. Likewise, the fuel consumption of the ship engine 3 may be determined only based on the fuel flow measured by the inlet sensor 33.

In the embodiments shown on Figures 2A and 2B, the fuel pump 21-2 may be omitted, e.g. in case the hydrostatic pressure in the fuel tank 21 and fuel suction from the shipboard power generator; 2 is sufficient to supply fuel to the shipboard power generator 2. Likewise, the fuel pump 21-3 may be omitted.

As will be appreciated, more than one quantity relating to the fuel may be measured at a given location in the containment system 20 by means of suitable corresponding sensors of the data acquisition system 30.

As will be appreciated, the layout of the containment system 20 and/or the data acquisition system 30 may be more complex than those shown on Figure 2A or on Figure 2B. Merely by way of example, the containment system 20 may include a plurality of fuel tanks 21, a plurality of fuel pumps, manifolds (not shown), corresponding fuel lines, and valves (not shown) for controlling the flow of fuel in the fuel lines. The data acquisition system 30 may accordingly include sensors associated with some or each of the fuel tanks 21, fuel pumps, manifolds, fuel lines, valves, and so on. The layouts shown on Figure 2A and Figure 2B are therefore merely examples for the purpose of explanation and are not intended to be limiting in any way. It will also be appreciated that the layouts shown on Figure 2A and Figure 2B are schematic, and that Figures 2A and 2B may not reflect the actual positions of the elements shown thereon aboard the ship 1.

It will also be appreciated that the elements of the containment system 20 and the data acquisition system 30 may be disseminated throughout the ship 1. Merely by way of example, when the containment system 20 includes a plurality of fuel tanks 21, the fuel tanks 21 may be arranged at various locations aboard the ship 1, which may for instance allow to alter the trim of the ship 1 to some degree by transferring fuel from one fuel tank 21 to another. In this case, the fuel pumps, manifolds, fuel lines and valves of the containment system 20 are arranged at various locations aboard the ship 1, and the sensors of the data acquisition system 30 are accordingly arranged at various locations aboard the ship 1.

It is desirable that the fuel supply system 10 can be protected from fuel theft. However, as mentioned above, seals or other tamper-evident devices may be an insufficient or even ineffective defence against fuel theft. Accordingly, the fuel system 11 further includes an integrity monitoring system 40.

As described below, the integrity monitoring system 40 ensures that attempted access to the containment system 20 can be detected. Also, the data acquisition system 30 may be tampered with to attempt to conceal fuel theft. Accordingly, the integrity monitoring system 40 desirably ensures that attempted access to the data acquisition system 30 can also be detected.

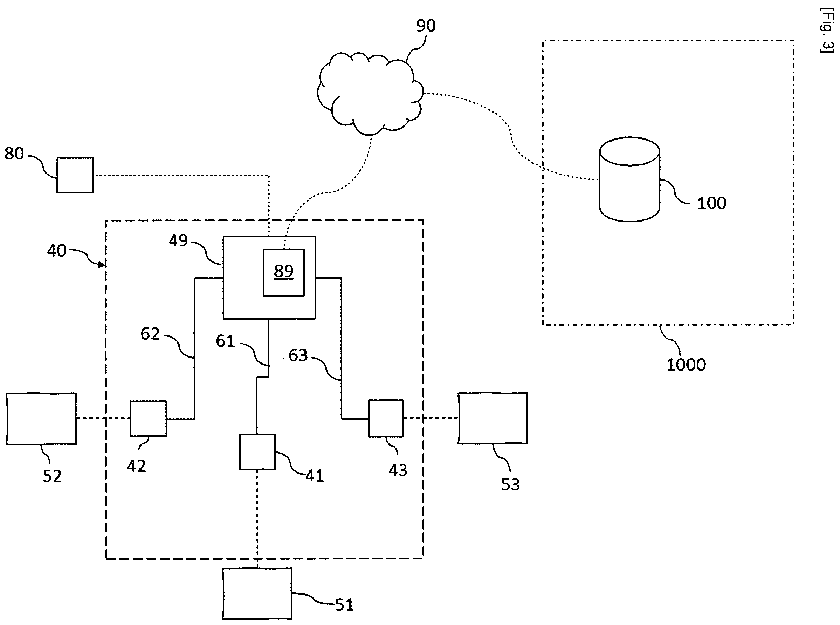

The integrity monitoring system 40 will now be described with reference to Figures 3 to 6. For convenience, the integrity monitoring system 40 will be referred to as "the system 40".

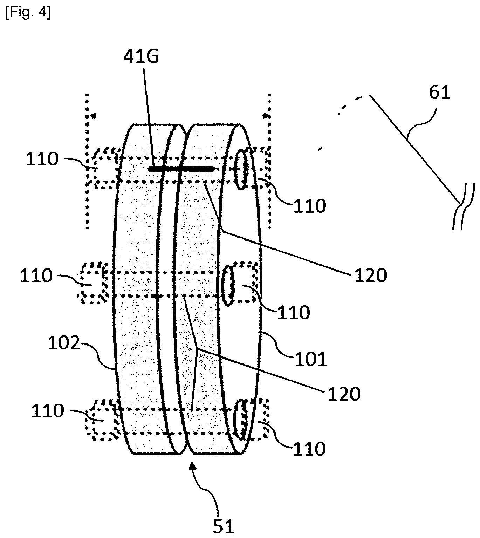

First, a high-level description of the system 40 will be provided with reference to Figure 3. Then, some specific implementations of the system 40 will be described with reference to Figures 4 to 6.

Figure 3 a block diagram schematically depicting the system 40. The system 40 includes a controller 49 and sensors 41, 42, 43. The sensors 41, 42, 43 are associated with respective access protection devices 51, 52, 53 aboard the ship 1. The sensors 41, 42, 43 are connected to the controller 49 via respective connections 61, 62, 63.

The access protection devices 51, 52, 53 provide protected access to the fuel or to an element of the fuel supply system 10. By "provides protected access", it is meant that the access protection device allows access therethrough only after a condition of the access protection device has been changed. An access protection device therefore has a protected condition in which access through the access protection device is not possible, and an unprotected condition in which access through the access protection device is possible.

As mentioned above, the sensor 41 (respectively 42, 43) is associated with the access protection device 51 (respectively 52, 53). The sensor 41 (respectively 42, 43) generates a detection signal representative of an actual condition of the access protection device 51 (respectively 52, 53). The controller 49 receives the detection signal and generates a notification in response to detecting a change of the actual condition of the access protection device 51 (respectively 52, 53) from the protected condition towards the unprotected condition.

As will be appreciated, the notification may alert a user, such as crew member aboard the ship 1, that an access protection device 51, 52, 53 has changed from its protected condition towards its unprotected condition. Therefore, the notification may indicate that access to the fuel or to an element of the fuel supply system 10 is being attempted through the access protection device 51, 52, 53. Upon reviewing the notification, said user may thus take appropriate action, such as sending a person to verify the condition of the access protection device 51, 52, 53.

In some embodiments, the notification generated by the controller 49 may be simply sent to a logger implemented on a shipboard computer for later review.

However, the controller 49 is preferably configured to send a message containing the notification to a user device 80 aboard the ship 1. The user device 80 may be a shipboard computer, for instance a shipboard computer arranged on the bridge 9 as shown schematically on Figure 1. Accordingly, a user can be quickly alerted via the user device 80 that access to the fuel or to an element of the fuel supply system 10 is being attempted.

In yet further embodiments, the controller 49 may send a message containing the notification to several user devices aboard the ship 1.

Alternatively, or additionally, the controller 49 may send a message containing the notification to an onshore station 1000. In this case, the controller 49 comprises a communication device 89. The communication device 89 is connected to the onshore station 1000 via a network connection 90, such as a mobile connection and/or a satellite connection. The network connection 90 is established via one or more suitable antennas 91 (shown schematically on Figure 1) aboard the ship 1. The network connection 90 is, e.g., established with an onshore server 100 located in the onshore station 1000. Accordingly, the owner of the ship 1 and/or relevant authorities may be informed, e.g. via a message sent by the onshore server 100, that access to the fuel or to an element of the fuel supply system 10 is being attempted.

The connections 61, 62, 63 may be implemented in various ways, including wireless connections, such as Wi-Fi (registered trademark) or Bluetooth (registered trademark). However, preferably, the connections 61, 62, 63 are wired connections. In the context of the system 40, wired connections are preferable over wireless connections. Wireless connections may not offer sufficient connection reliability aboard the ship 1 and/or may require installing dedicated power supplies (such as batteries) to power wireless emitters, which may require additional maintenance. Wired connections, in contrast, offer satisfactory connection reliability and do not require wireless emitters. The wired connections 61, 62, 63 may be implemented in various ways, such as Ethernet (registered trademark), RS-485, or PROFIBUS (registered trademark).

Further, when the connections 61, 62, 63 are wired connections, the controller 49 may be configured to generate a notification in response to detecting that a wired connection has been interrupted for more than a predetermined amount of time. The predetermined amount of time may be selected to allow for some amount of network latency and/or downtime. Merely by way of example, the predetermined amount of time may be in the order of minutes, e.g., 5 minutes, 2 minutes, or 1 minute. Accordingly, the user receiving the notification from the controller 49 may recognize that a wired connection 61, 62, 63 has been interrupted, indicating potential tampering with the system 40 and therefore attempted fuel theft. Thus, by implementing the connections 61, 62, 63 as wired connections and by configuring the controller 49 to generate a notification in response to detecting that a wired connection 61, 62, 63 has been interrupted for more than a predetermined amount of time, the system 40 constitutes an even more effective defence against fuel theft.

Figure 4 illustrates an access protection device 51 according to one embodiment. The access protection device 51 provides protected access to the fuel or to an element of the containment system 20. The access protection device 51 includes bolts 120 and nuts 110 screwed onto the bolts 120 to attach two parts (not shown) of the containment system 20, for instance via flanges 101, 102. For instance, the two parts of the containment system 20 may be two parts of a fuel pipe. In this case, the fuel pipe may form part of a fuel line of the containment system 20, e.g. the aforementioned fuel lines 22, 23, 24, 26, 229, 239. Alternatively, the two parts of the containment system 20 may be two parts of a fuel tank (e.g., a fuel tank 21 or another fuel reservoir). In this case, one of the two parts may be a removable cover of the fuel tank and the other of the two parts may be a fixed portion of the fuel tank.

The sensor 41 includes a strain gauge 41G associated with a nut 110 to detect a tightening force of the bolt 120 on which the nut 110 is screwed. As will be appreciated, a decrease in the tightening force means that the nut 110 is being unscrewed and that the bolt 120 is about to be removed, thereby enabling unprotected access to the fuel or to the element of the containment system 20. Accordingly, the controller 49 is configured to generate a notification upon detecting that the strain measured by the strain gauge 41G has decreased below a predetermined strain threshold.

In other embodiments, several nuts 110 may each be provided with a strain gauge 41G; however, in this case, it is preferable that no more than one nut 110 per bolt 120 be provided with a strain gauge 41G. In yet other embodiments, the strain gauge 41G may be associated with the bolt 120.

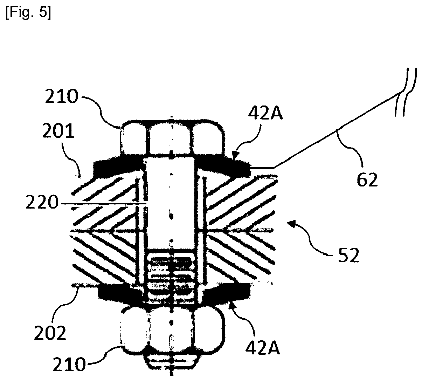

Figure 5 illustrates an access protection device 52 according to one embodiment. Like the access protection device 51, the access protection device 52 provides protected access to the fuel or to an element of the containment system 20. The access protection device 52 includes a bolt 220 and nuts 210 screwed onto the bolt 220 to attach two parts (not shown) of the containment system 20, for instance via flanges 201, 202. For instance, the two parts of the containment system 20 may be two parts of a fuel pipe. In this case, the fuel pipe may form part of a fuel line of the containment system 20, e.g. the aforementioned fuel lines 22, 23, 24, 26, 229, 239. Alternatively, the two parts of the containment system 20 may be two parts of a fuel tank (e.g., a fuel tank 21 or another fuel reservoir). In this case, one of the two parts may be a removable cover of the fuel tank and the other of the two parts may be a fixed portion of the fuel tank.

The sensor 42 includes an annular load cell (also known as a washer load cell) 42A associated with a nut 210. More specifically, the annular load cell 42A is arranged between the nut 210 and the corresponding flange 201, 202, to detect a tightening force of the bolt 220 on which the nut 210 is screwed. As will be appreciated, a decrease in the tightening force means that the nut 210 is being unscrewed and that the bolt 220 is about to be removed, thereby enabling unprotected access to the fuel or to the element of the containment system 20. Accordingly, the controller 49 is configured to generate a notification upon detecting that the load measured by the annular load cell 42A has decreased below a predetermined strain threshold. If desired, both nuts 210 on the same bolt 220 may be provided with an annular load cell 42A as shown on Figure 5.

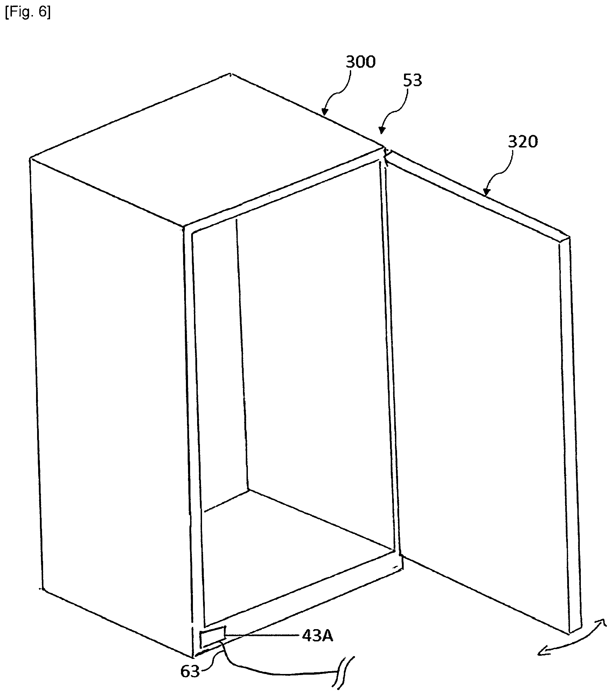

Figure 6 illustrates an access protection device 53 according to one embodiment. The access protection device 53 comprises an enclosure 300. In the example shown on Figure 6, the enclosure 300 is a cabinet. In another embodiment, the enclosure 300 may be a room. The enclosure 300 encloses an element (not shown) of the fuel system 10. For instance, the enclosure 300 encloses an element of the data acquisition system 30, such as the controller 39, a sensor (e.g. one of the aforementioned sensors 31, 32, 33, 34, 36) or a portion of said sensor, and so on. Alternatively, the enclosure 300 encloses an element of the containment system 20. The enclosure 300 may also enclose two or more elements of the containment system 20, or two or more elements of the data acquisition system 30, or one or more elements of the containment system 20 and one or more elements of the data acquisition system 30.

The enclosure 300 comprises a door 320. The sensor 43 includes a magnetic or infrared sensor 43A, the sensor 43A detecting a closed condition and an open condition of the door 320. As will be appreciated, an opening of the door 320 means that the enclosure 300 is being opened, thereby enabling access to the element of the fuel system 10 enclosed by the enclosure 300. Accordingly, the controller 49 is configured to generate a notification upon detecting that the condition of the door 320 has changed from the closed condition to the open condition.

Access protection devices, including but not limited to of the types described above, may be provided throughout the ship 1, to provide protected access to as many elements of the fuel supply system 10 as desired.

In all the embodiments which have been described so far, the notification is generated and sent by the controller 49, which is aboard the ship 1. However, in alternative embodiments, the notification is generated by an onshore controller and then communicated to the controller 49.

Returning to Figure 3, in one such embodiment, the onshore server 100 in the onshore station 1000 functions as the onshore controller. More specifically, the controller 49 sends the detection signal generated by the sensor 41 (respectively 42, 43) to the onshore server 100 via the communication device 89. The onshore server 100 receives the detection signal and generates the notification in response to detecting a change of the actual condition of the access protection device 51 (respectively 52, 53) from the protected condition towards the unprotected condition. The controller 49 receives the notification from the onshore server 100 via the communication device 89. Upon receiving the notification from the onshore server 100, the controller 49 sends a message containing the notification as has been described above.

Although the invention has been described in connection with a plurality of particular embodiments, it is obvious that it is in no way limited to them and that it encompasses all technical equivalents and combinations of the means described if the latter fall within the scope of the invention.

The use of the verb "to include" or "to comprise" and conjugate forms thereof does not exclude the presence of elements or steps other than those stated in a claim.

In the claims, any reference sign between parentheses should not be interpreted as a limitation of the claim.

## Claims

1. A fuel. system (11) for a ship (1), the fuel system (11) comprising:
- a fuel supply system (10) configured to supply fuel to a fuel consuming device (2, 3);
- an access protection device (51, 52, 53) for providing protected access to the fuel or to an element of the fuel supply system (10), the access protection device (51, 52, 53) having a protected condition and an unprotected condition; and
- an integrity monitoring system (40), the integrity monitoring system (40) including a controller (49) and a sensor (41, 42, 43) connected to the controller (49),
wherein the sensor (41, 42, 43) is associated with the access protection device (51, 52, 53) and is configured to generate a detection signal representative of an actual condition of the access protection device (51, 52, 53), and wherein the controller (49) is configured to send a notification in response to a change of the detection signal indicating a change of the actual condition of the access protection device (51, 52, 53) from the protected condition towards the unprotected condition.

2. The fuel system (11) for a ship (1) as claimed in claim 1, wherein the access protection device (51, 52) includes a bolt (120, 220) and a nut (110, 210) screwed onto the bolt (120, 220), and wherein the sensor (41, 42) is configured to detect a tightening force of the bolt (120, 220).

3. The fuel system (11) for a ship (1) as claimed in claim 2, wherein the fuel supply system (10) includes a containment system (20) for containing the fuel, wherein the containment system (20) comprises two parts attached by the bolt (120, 220) and the nut (110, 210), and wherein the two parts of the containment system (20) comprise two parts of a fuel pipe or two parts of a fuel tank.

4. The fuel system (11) for a ship (1) as claimed in any one of claims 1 to 3, wherein the access protection device (53) includes an enclosure (300) and wherein the element of the fuel supply system (10) is enclosed in the enclosure (300).

5. The fuel system (11) for a ship (1) as claimed in claim 4, wherein the enclosure (300) comprises a door (320), and wherein the sensor (43) is configured to detect a closed condition and an opened condition of the door (320).

6. The fuel system (11) for a ship (1) as claimed in any one of claims 1 to 5, wherein the sensor (43) comprises a magnetic or infrared sensor (43A).

7. The fuel system (11) for a ship (1) as claimed in any one of claims 1 to 6, wherein the sensor (41, 42, 43) is connected to the controller (49) via a wired connection (61, 62, 63).

8. The fuel system (11) for a ship (1) as claimed in claim 7, wherein the controller (49) is further configured to generate a notification in response to detecting that the wired connection (61, 62, 63) has been interrupted for more than a predetermined amount of time.

9. The fuel system (11) for a ship (1) as claimed in any one of claims 1 to 8, wherein the controller (49) is configured to send a message containing the notification to a user device (80) aboard the ship (1).

10. The fuel system (11) for a ship (1) as claimed in any one of claims 1 to 9, wherein the controller (49) is configured to send a message containing the notification to an onshore station (1000).

11. The fuel system (11) for a ship (1) as claimed in any one of claims 1 to 10, wherein the controller (49) is configured to receive the detection signal and to generate the notification in response to a change of the detection signal indicating a change of the actual condition of the access protection device (51, 52, 53) from the protected condition towards the unprotected condition.

12. The fuel system (11) for a ship (1) as claimed in any one of claims 1 to 10, wherein the controller (49) comprises a communication device (89) connected to an onshore controller (100) for sending the detection signal to the onshore controller (100) and for receiving the notification from the onshore controller (100), the onshore controller (100) being configured to generate the notification in response to a change of the detection signal indicating a change of the actual condition of the access protection device (51, 52, 53) from the protected condition towards the unprotected condition, and wherein the controller (49) is configured to send the notification upon receiving the notification from the onshore controller (100).

13. A ship (1) comprising a fuel system (11) as claimed in any one of claims 1 to 12.
